# FASCICULE DE BREVET EUROPEEN

(11) **EP 1 294 067 B1**
(45) Date de publication et mention de la délivrance du brevet: **08.06.2005**
(21) Numéro de dépôt: 02292233.0
(22) Date de dépôt: 12.09.2002
(51) Int. Cl.: H02G 9/06, H02G 1/08, G02B 6/50

(54) **Procédé d'installation d'un élément tubulaire**
Verfahren zum Installieren eines rohrförmigen Elements
Process of installation of a tubular element

(30) Priorité: 17.09.2001 FR 0111989
(43) Date de publication de la demande: 19.03.2003
(73) Titulaire: ALCATEL, 75008 Paris (FR)
(72) Inventeur: Herrmann, Peter Friedrich, 78510 Triel sur Seine (FR); Mistry, Keku, 78290 Croissy sur Seine (FR); Wurier, Bernard, 95760 Valmondois (FR); Gauthier, Philippe, 31600 Muret (FR)
(74) Mandataire: Blokland, Arie

(56) Documents cités:
- DE-A- 19 752 424
- DE-A- 19 861 090
- DE-A- 19 921 382
- GB-A- 2 124 728
- PATENT ABSTRACTS OF JAPAN vol. 013, no. 232 (E-765), 29 mai 1989 (1989-05-29) & JP 01 039208 A (TOUBU KURIINAA SERVICE:KK), 9 février 1989 (1989-02-09)

## Description

La présente invention se rapporte à un procédé pour l'installation d'un élément tubulaire dans une cavité existante. L'élément tubulaire peut être un câble ou un tuyau, et notamment un tube creux destiné à accueillir un ou plusieurs câbles. La cavité est en particulier une cavité tubulaire par exemple un réseau de canalisations pour la collecte d'eaux usées ou pluviales. L'invention concerne plus particulièrement des opérations se déroulant dans des cavités tubulaires souterraines non-pressurisées de faible diamètre, en particulier de moins de 200mm de diamètre, tel qu'un réseau d'égout ou un tuyau d'évacuation d'un bâtiment, dans lesquels l'accès direct visuel et matériel est impossible.

De manière courante l'élément tubulaire est fixé à la paroi interne d'une cavité inaccessible par des moyens de fixation régulièrement disposés. Ces moyens de fixation sont fixés à l'avance sur la paroi interne de la cavité, le plus souvent à la partie supérieure, par un dispositif téléguidé. Un problème est d'assurer une fixation solide et durable de ces moyens sur la paroi de la cavité dont le matériau constitutif est variable. Ce type de procédé a pour inconvénient de nécessiter la pose préalable des moyens de fixation ce qui constitue une opération longue et parfois difficile. En outre ces moyens de fixation constituent des reliefs sur la paroi. Ces reliefs sont susceptibles de retenir des résidus solides circulant dans le conduit, et gênent les opérations de nettoyage ultérieures. Une solution à ce problème a été apportée par l'utilisation d'un revêtement recouvrant la totalité de la paroi interne de la cavité.

Le document GB-2 124 728 décrit l'installation d'un câble de télévision dans un conduit d'égout existant. De préférence le câble est suspendu au plafond de la cavité. Pour retenir le câble, ce document propose d'utiliser un matériau plastique auto-adhésif enroulé en spirale le long de la cavité, le câble étant pris en sandwich entre la paroi interne de la cavité et ce matériau de revêtement. Néanmoins la mise en place d'un tel revêtement est lente et onéreuse car la totalité de la surface de la cavité se trouve recouverte du matériau adhésif. Par ailleurs l'adhérence à la paroi de ce revêtement se dégrade dans le temps. Les conséquences en sont que le maintien du câble n'est plus assuré et que des portions de revêtement peuvent se détacher, notamment de la partie supérieure de la cavité sous l'effet de la gravité, entraînant une obstruction au moins partielle de la cavité.

Le document JP-1 039 208 propose de maintenir en place un câble par un revêtement en matériau souple absorbant. Ce revêtement est introduit sous forme d'une poche dans la cavité grâce à un fluide sous pression. Une résine de durcissement est pulvérisée sur le revêtement au fur et à mesure de son introduction. Ce procédé est particulièrement coûteux d'une part parce que la totalité de la surface de la cavité se trouve recouverte du matériau et d'autre part à cause de l'importance de l'infrastructure extérieure nécessitée par la pulvérisation de résine.

Le document DE-198 61 090 mentionne un procédé de collage d'un câble à fibre optique grâce à une couche d'adhésif déposée préalablement sur l'objet à fixer. Un dispositif d'appui maintient l'objet sur la ligne de pose et applique l'adhésif sur la paroi. La couche adhésive peut être temporairement recouverte d'un film protecteur pour faciliter les manipulations. Dans ce cas le film est retiré grâce à un dispositif de retrait avant d'appuyer le corps du câble contre la paroi de la canalisation. Ce procédé présente l'inconvénient de ne pas être applicable à un élément tubulaire. En effet pour déposer sur l'objet une quantité suffisante de produit adhésif pour obtenir une bonne fixation, celui-ci doit présenter une forme concave dont le creux contient l'adhésif. L'adhésion est obtenue en aplatissant la concavité contre la paroi. La qualité de la fixation de l'objet sur la paroi par ce procédé n'est pas suffisante car l'adhérence de l'objet sur la paroi n'implique qu'une partie relativement faible de la périphérie de l'objet, correspondant à la surface de la concavité. En outre l'adhérence va inévitablement se dégrader dans le temps et l'objet finira par se détacher de la paroi.

Le document DE-1 992 1382, qui représente l'état de la technique le plus proche, mentionne un procédé d'installation d'un élément tubulaire dans une cavité grâce à une couche d'un composé adhésif déposé préalablement sur la surface extérieure de l'élément tubulaire. La couche adhésive recouvre toutela périphérie extérieure de l'élément. Dans le procédé on introduit dans la cavité un ensemble comprenant un tuyau plié à plat appuyant l'élément tubulaire à fixer et la couche adhésive. Après avoir positionné l'ensemble dans la cavité le tuyau plié est rempli d'un gaz ou d'un liquide pour presser l'élément tubulaire contre le plafond de la cavité pendant un traitement d'activation du composé adhésif pour fixer l'élément tubulaire. Quand la fixation de l'élément tubulaire est assurée le tuyau est retiré de la cavité.

La présente invention a pour but d'éliminer les inconvénients de l'art antérieur, et propose à cet effet un procédé pour l'installation d'un élément tubulaire dans une cavité existante qui soit rapide et peu onéreux tout en assurant une fixation plus durable.

Partant du document DE-1 992 1382 le but de la présente invention est obtenu par un procédé d'installation d'un élément tubulaire dans un cavité, comprenant les étapes suivantes:
- on prépare un combiné comprenant ledit élément tubulaire recouvert d'une couche d'un composé de fixation,
- on positionne ledit combiné le long de la surface interne de ladite cavité, et
- on effectue un traitement d'activation dudit composé de manière à fixer ledit élément tubulaire sur ladite surface interne, caractérisé en ce qu'on positionne ledit combiné sur le sol de la ladite cavité.

Dans le procédé selon la présente invention le combiné formé par l'élément tubulaire associé à son moyen de fixation est introduit dans la cavité et positionné sur le sol de la cavité.

L'avantage de ce procédé est d'éviter la mise en place préalable sur la paroi interne de la cavité de moyens de fixation de l'élément tubulaire. En outre ce procédé est moins onéreux que celui impliquant le revêtement complet de la cavité.

De cette manière on évite d'avoir recours à un moyen de rétention du combiné dans la position choisie, au moins jusqu'à ce que la fixation de l'élément tubulaire sur la paroi interne soit assurée. Le procédé gagne ainsi en rapidité et en facilité d'exécution. L'élément tubulaire peut être en matière plastique, comme le polyéthylène, ou bien en métal comme l'acier ce qui présente l'avantage de résister aux rongeurs. Lorsqu'il est creux, il peut être rempli d'un liquide pendant le traitement d'activation pour contre-balancer la poussée d'Archimède imposée par le compose de fixation lorsqu'il est liquide. Dans le cas où l'élément tubulaire est destiné à être entièrement noyé dans le composé de fixation, on utilise de préférence un élément tubulaire métallique annelé qui présente l'avantage du poids. Dans le cas contraire, l'élément tubulaire peut être recouvert de métal seulement partiellement pour résister aux rongeurs.

Selon une variante d'exécution de l'invention, le composé de fixation peut être constitué d'une enveloppe tubulaire coaxiale audit élément tubulaire contenant une matière adhérente à l'état de liquide visqueux à température ambiante, l'ensemble formant ainsi une couche épaisse tout autour de l'élément tubulaire. De préférence ledit composé de fixation comprend une matière adhérente choisie parmi une colle, une résine, le polyéthylène, un ciment, du béton et leurs mélanges. La composé de fixation peut en outre contenir un additif répulsif destiné à éloigner les rongeurs.

Le traitement d'activation est au moins un traitement choisi parmi un traitement thermique, un traitement chimique et un traitement mécanique. Le traitement d'activation remplit deux fonctions qui assurent une fixation solide de l'élément tubulaire. D'une part il provoque la déformation de la couche du composé de fixation afin d'augmenter sa surface de contact avec la paroi interne. Et d'autre part il rend adhérent ce composé simultanément à la paroi interne et à l'élément tubulaire.

Un traitement thermique peut par exemple consister à envoyer un jet de vapeur à haute température à l'intérieur d'un élément tubulaire creux pour provoquer la fusion du composé de fixation. On peut aussi y faire passer un courant électrique pour obtenir la fusion du composé de fixation grâce à la chaleur dégagée par effet Joule lorsque l'élément tubulaire est un tube creux conducteur soit parce qu'il est en métal, soit parce qu'on l'a revêtu d'une ou plusieurs bandes métalliques sur sa longueur.

Un traitement chimique peut être réalisé en envoyant dans la cavité un composé chimique susceptible de réagir avec le composé de fixation afin de lui conférer les propriétés nécessaires mentionnées précédemment. En particulier le traitement chimique d'activation peut consister à envoyer dans la cavité un composé susceptible de déclencher une réaction chimique entre certains constituants du composé de fixation. Par exemple dans le cas le plus simple on utilisera de l'eau pour rendre le ciment coulant, celui-ci devenant insensible à l'eau après solidification.

Lorsque le composé de fixation est constitué d'une poche contenant une matière adhérente, le traitement mécanique peut consister à pratiquer une déchirure dans la poche pour laisser apparaître la matière adhérente, suivi ou non de l'évacuation de la poche vers l'extérieur.

Selon un mode de réalisation particulier de l'invention, ledit traitement d'activation fait passer ledit composé de fixation de l'état solide à l'état liquide, de préférence visqueux. Le composé de fixation se trouve alors sous la forme d'un liquide dont la consistance est plus ou moins épaisse selon les conditions opératoires choisies en fonction du résultat escompté. Dans cet état il recouvre la portion de la paroi interne placée sous l'élément tubulaire et de part et d'autre de celui-ci. Ainsi la fixation de l'élément tubulaire est assurée de manière fiable, y compris dans la durée.

Si la quantité de composé de fixation et les conditions opératoires le permettent, le composé peut remplir le fond de la cavité, allant même jusqu'à recouvrir complètement l'élément tubulaire. Les irrégularités de la paroi à la partie inférieure de la cavité sont ainsi masquées, et le sol de la cavité présente alors une surface horizontale plane et relativement lisse.

Bien entendu, plusieurs traitements d'activation parmi ceux décrits précédemment peuvent être mis en oeuvre simultanément ou en combinaison, par exemple la combinaison d'un traitement mécanique et d'un traitement thermique.

Le procédé selon l'invention présente de nombreux avantages. Il est simple à mettre en oeuvre et plus rapide que les procédés connus. Il évite notamment l'implantation préalable des moyens de fixation puisque ceux-ci sont introduits simultanément à l'élément tubulaire. Les aspérités sont réduites ce qui facilite d'une part le nettoyage de la cavité et d'autre part ne perturbe pas la circulation dans la cavité, notamment l'écoulement des eaux usées ou pluviales. Ce procédé est utilisable dans tout type de cavité quelle que soit sa topologie, même si la paroi présente des reliefs. Ce procédé présente au contraire l'avantage de dissimuler les défauts de la partie de la paroi de la cavité sur laquelle est fixé l'élément tubulaire. Enfin l'élément tubulaire étant déposé sur le sol, le vieillissement n'entraîne pas les conséquences négatives du procédé de l'art antérieur utilisant un revêtement couvrant également le plafond de la cavité.

L'installation de l'élément tubulaire est définitive et, dans le cas d'un élément tubulaire creux destiné à accueillir des câbles, elle permet son utilisation ultérieure sans nouvelle intervention. Dans un premier temps on peut y faire passer des câbles à fibres optiques, mais ces câbles peuvent ensuite être changés sans inconvénient. Il est même envisageable de modifier la destination du tube creux, sous réserve de compatibilité des matériaux, pour l'utiliser par exemple comme conduit de fluide.

D'autres caractéristiques et avantages de la présente invention apparaîtront à la lecture de la description qui suit d'un mode de réalisation, donnés bien entendu à titre illustratif et non limitatif, et dans le dessin annexé sur lequel
- la figure 1 représente un premier mode de réalisation d'un combiné avant son installation dans la cavité,
- la figure 2 représente le combiné de la figure 1 après son introduction dans la cavité,
- la figure 3 est une coupe de la cavité selon un premier mode de réalisation de l'invention montrant l'élément tubulaire après son installation, et
- la figure 4 est une coupe de la cavité selon un deuxième mode de réalisation de l'invention montrant l'élément tubulaire après son installation,
- la figure 5 représente un deuxième mode de réalisation d'un combiné avant son installation dans la cavité,
- la figure 6 représente un troisième mode de réalisation d'un combiné avant son installation dans la cavité,
- la figure 7 représente un quatrième mode de réalisation d'un combiné avant son installation dans la cavité.

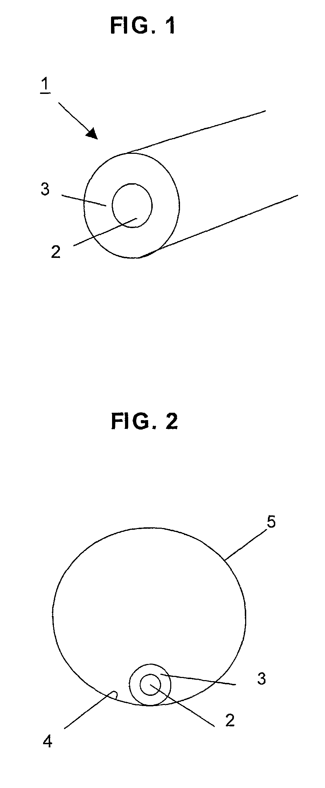

Un combiné 1 comprend un élément tubulaire 2 enrobé d'une couche épaisse d'un composé de fixation 3, comme représenté sur la figure 1. L'élément tubulaire 2 est par exemple un tube creux d'un diamètre inférieur à 10mm destiné à recevoir un ou plusieurs câbles, notamment des câbles à fibres optiques utilisés dans les télécommunications. Une fois le tube installé, les câbles en place peuvent être changés ou d'autres câbles peuvent leur être ajoutés sans qu'il soit nécessaire de réitérer les opérations d'installation. Le composé de fixation 3 est par exemple une colle fusible qui est solide à la température d'opération.

Le combiné 1 est introduit dans la cavité de manière à reposer sur le sol 4 de la cavité 5 d'un diamètre de l'ordre de 100mm, comme représenté sur la figure 2. L'installation du combiné 1 dans la cavité 5 comporte le plus souvent au moins deux phases. Une première phase qui est une phase d'exploration et de nettoyage des parois de la cavité et une autre phase qui est l'installation proprement dite du combiné 1 dans la cavité 5, le combiné 1 étant entraîné dans la cavité 5 par un moyen mobile et mis en place.

Le nettoyage des parois de la cavité 5 peut être effectué par tout moyen connu, mais on utilisera de préférence un appareil mobile télécommandé comportant un moyen de déplacement linéaire par propulsion et un moyen d'orientation dans l'espace. Ces moyens utilisent des jets de fluide sous pression et sont commandés de manière hydraulique ou pneumatique. L'appareil mobile peut être équipé d'un moyen d'exploration et guidage, tel qu'un dispositif de prise de vue, d'un moyen d'éclairage, d'un moyen de repérage de la verticale, et/ou d'un moyen de nettoyage. Ce moyen de nettoyage peut comprendre des jets de fluide sous pression et un outil capable d'exercer une action physique sur la paroi, comme un racloir, une brosse métallique, un dispositif d'abrasion ou tout autre instrument apte à égaliser et assainir la surface interne de la paroi de la canalisation. Ce nettoyage doit être effectué soigneusement et complètement, notamment par abrasion, pour garantir une bonne adhérence de l'élément tubulaire sur la paroi.

Pour la mise en place du combiné 1 dans la cavité 5, on peut utiliser un appareil mobile télécommandé analogue à celui de la première phase. Le combiné 1 est tracté par l'appareil et déposé à l'emplacement souhaité sur le sol 4 de la cavité 5. A l'aide du dispositif utilisé pour le nettoyage, on peut aussi installer un moyen de traction, tel qu'un câble ou une corde, qui permet de tirer le combiné jusqu'à l'emplacement choisi.

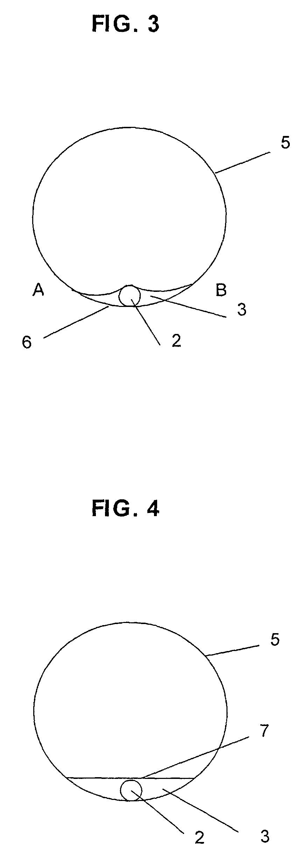

Une fois placé dans la cavité 5, le combiné 1 est soumis à un traitement thermique d'activation. Un jet de vapeur d'eau est injecté dans le tube 2 creux dont les parois transmettent la chaleur à la couche de colle fusible 3. La colle 3 se ramollie alors suffisamment pour couler et s'étaler de part et d'autre du tube 2 comme montré sur la figure 3. L'interruption de l'admission de vapeur permet à la colle 3 de se solidifier en refroidissant, et d'adhérer fortement au tube 2 d'une part et la paroi interne d'autre part. Dans ce cas, la portion de surface 6 de la paroi interne avec laquelle la colle 3 est en contact est représentée par l'arc de cercle compris entre les points A et B sur la figure 3. L'installation du tube 2 est définitive et permet son utilisation ultérieure sans nouvelle intervention. Dans le cas présent, la couche du composé de fixation 3 a initialement une épaisseur correspondant à un volume de colle de l'ordre de 1 à 4 fois le volume de l'élément tubulaire par unité de longueur.

Si la quantité de colle fusible 3 disponible est suffisante et si la température atteinte par la colle 3 lui confère une fluidité convenable, la fusion de la colle 3 conduit au remplissage de la partie inférieure de la cavité 5 comme représenté sur la figure 4. Dans ce cas la couche du composé de fixation 3 a initialement une épaisseur correspondant à un volume de colle de l'ordre de 4 à 8 fois le volume de l'élément tubulaire par unité de longueur. La colle après refroidissement présente une surface 7 horizontale plane et dépourvue d'aspérité gênante. L'élément tubulaire 2 est de préférence noyé dans la colle 3 afin d'éviter de former un relief sur la surface 7. Dans ce cas on utilise de préférence un tube annelé. Une telle surface 7 présente le double avantage de dissimuler les défauts de la partie inférieure de la paroi de la cavité 5 et de fournir une surface de qualité améliorée favorable à l'emploi de la cavité 5 pour d'autres fonctions.

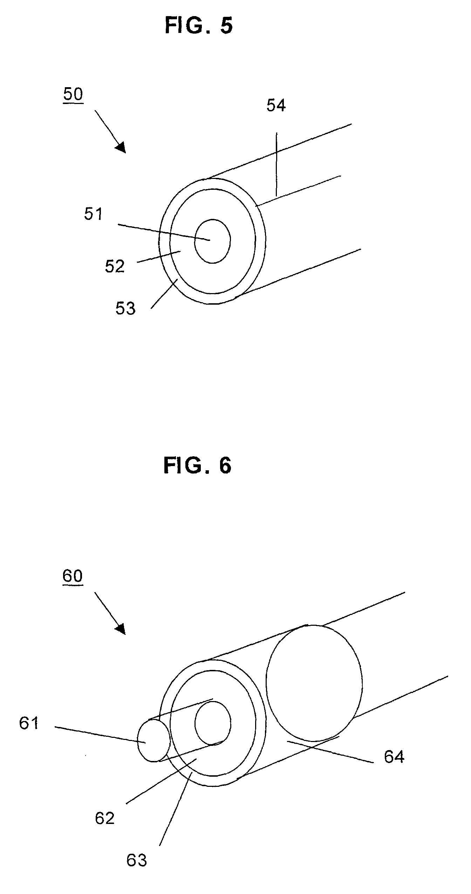

D'autres modes de réalisation du combiné selon l'invention sont illustrés sur les figures 5 à 8.

Le combiné 50 de la figure 5 est constitué de l'élément tubulaire 51 recouvert d'un composé de fixation constitué d'une matière adhérente 52 ayant la consistance d'un liquide épais, comme une colle, enfermée dans une poche 53, par exemple en polymère. Cette poche 53 comporte un affaiblissement 54 linéaire parallèle à l'axe du combiné 50 destiné à se rompre mécaniquement pour libérer la matière adhérente 52. La poche rompue est de préférence évacuée pour ne pas entraver la fixation de l'élément tubulaire sur la paroi.

La figure 6 illustre le cas où la poche 63 ne comporte pas d'affaiblissement. Le combiné 60 est constitué de l'élément tubulaire 61 recouvert d'un composé de fixation analogue à celui de la figure 5, constitué d'une matière adhérente 62 enfermée dans une poche 63. La poche 63 est retirée par retournement et traction sur la partie retournée 64.

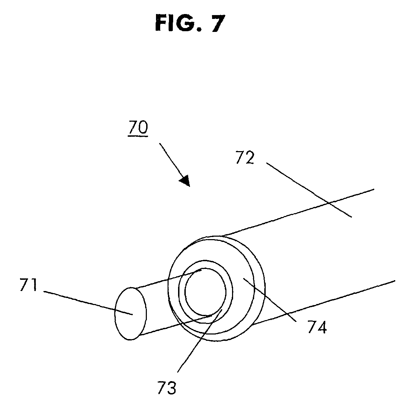

Selon une autre variante de réalisation représentée sur la figure 7, le combiné 70 est constitué de l'élément tubulaire 71 recouvert d'un composé de fixation analogue à celui de la figure 6. La poche 72 contenant la matière adhérente 73 est terminée par une buse 74 conique dont l'extrémité entoure l'élément tubulaire 71 de manière à ménager un espace rempli de la matière adhérente 73. Une fois le combiné 70 en place, une pression est appliquée à l'extrémité de la poche 72 se trouvant à l'extérieur. La poche 72 est alors déchirée puis retirée par traction entraînant la buse 74. La couche de matière adhérente laissée sur l'élément tubulaire 71, ayant la consistance d'un liquide épais, se répand sur la paroi de la cavité de chaque côté de l'élément tubulaire 71.

Le procédé selon l'invention a été décrit pour l'installation d'un seul élément tubulaire mais il est bien entendu que ce procédé s'applique également à l'installation de plusieurs éléments tubulaires, éventuellement de différents diamètres, dont les fonctions peuvent être similaires ou différentes. Ces éléments tubulaires peuvent être disposés aussi bien côte à côte que superposés.

## Revendications

1. Procédé d'installation d'un élément tubulaire (2; 51; 61; 71) dans une cavité (5), comprenant les étapes suivantes:
- on prépare un combiné (2, 3; 50; 60; 70) comprenant ledit élément tubulaire (2; 51; 61; 71) recouvert d'une couche d'un composé de fixation (3; 52; 62; 73),
- on positionne ledit combiné (2, 3; 50; 60; 70) le long de la surface interne de ladite cavité (5), et
- on effectue un traitement d'activation dudit composé de manière à fixer ledit élément tubulaire (2; 51; 61; 71) sur ladite surface interne, **caractérisé en ce qu'**on positionne ledit combiné (2, 3; 50; 60; 70) sur le sol de la ladite cavité (5).

2. Procédé selon la revendication 1, dans lequel ledit élément tubulaire (2; 51; 61; 71) est en métal ou en matière plastique.

3. Procédé selon l'une des revendications précédentes, dans lequel ledit élément tubulaire (2; 51; 61; 71) est annelé.

4. Procédé selon l'une des revendications précédentes, dans lequel ledit composé de fixation est constitué d'une poche (53; 63; 72) contenant une matière adhérente (52; 62; 73).

5. Procédé selon l'une des revendications précédentes, dans lequel ledit composé de fixation comprend une matière adhérente (52; 62; 73) choisie parmi une colle, une résine, le polyéthylène, un ciment, du béton et leurs mélanges.

6. Procédé selon l'une des revendications précédentes, dans lequel ledit traitement d'activation fait passer ledit composé de fixation de l'état solide à l'état liquide.

7. Procédé selon l'une des revendications précédentes, dans lequel ledit traitement d'activation est au moins un traitement choisi parmi un traitement thermique, un traitement chimique et un traitement mécanique.

8. Procédé selon la revendication 7, dans lequel ledit traitement thermique consiste à envoyer de la vapeur à haute température à l'intérieur dudit élément tubulaire creux.

9. Procédé selon la revendication 7, dans lequel ledit traitement thermique consiste à faire passer un courant électrique.

10. Procédé selon la revendication 7, dans lequel ledit traitement chimique consiste à envoyer dans ladite cavité un composé chimique susceptible de déclencher une réaction chimique entre certains constituants dudit composé de fixation.

11. Procédé selon la revendication 7, dans lequel ledit traitement mécanique consiste à perforer ladite poche.

## Patentansprüche

1. Verfahren zur Installation eines rohrförmigen Elements (2; 51; 61; 71) in einem Hohlraum (5), welches die folgenden Schritte aufweist:
- es wird ein Verbund (2, 3; 50; 60; 70) hergestellt, welcher das rohrförmige Element (2; 51; 61;71) aufweist, das mit einer Schicht eines Befestigungsverbunds (3; 52; 62; 73) bedeckt ist,
- der Verbund (2, 3; 50; 60; 70) wird entlang der Innenfläche des Hohlraums (5) angeordnet, und
- es wird eine Behandlung zur Aktivierung des Verbunds durchgeführt, um das rohrförmige Element (2; 51; 61;71) an der Innenfläche zu befestigen, **dadurch gekennzeichnet, dass** der Verbund (2, 3; 50; 60; 70) auf dem Boden des Hohlraums (5) positioniert wird.

2. Verfahren gemäss Anspruch 1, in welchem das rohrförmige Element (2; 51; 61;71) aus Metal oder aus Kunststoff ist.

3. Verfahren gemäss einem der vorausgegangenen Ansprüche, in welchem das rohrförmige Element (2; 51; 61;71) geringelt ist.

4. Verfahren gemäss einem der vorausgegangenen Ansprüche, in welchem der Befestigungsverbund aus einer Tasche (53; 63; 72) gebildet ist, welche ein Klebematerial (52; 62; 73) enthält.

5. Verfahren gemäss einem der vorausgegangenen Ansprüche, in welchem der Befestigungsverbund ein Klebematerial (52; 62; 73) aufweist, das gewählt ist aus einem Klebstoff, einem Harz, Polyethylen, einem Zement, Beton sowie deren Mischungen.

6. Verfahren gemäss einem der vorausgegangenen Ansprüche, in welchem die Behandlung zur Aktivierung den Befestigungsverbund vom festen Zustand in den flüssigen Zustand bringt.

7. Verfahren gemäss einem der vorausgegangenen Ansprüche, in welchem die Behandlung zur Aktivierung wenigstens eine Behandlung ist, die aus einer Wärmebehandlung, einer chemischen Behandlung und einer mechanischen Behandlung besteht.

8. Verfahren gemäss Anspruch 7, in welchem die Wärmebehandlung darin besteht, Dampf mit hoher Temperatur in das Innere des hohlen rohrförmigen Elements einzubringen.

9. Verfahren gemäss Anspruch 7, in welchem die Wärmebehandlung darin besteht, einen elektrischen Strom durchfließen zu lassen.

10. Verfahren gemäss Anspruch 7, in welchem die chemische Behandlung darin besteht, in den Hohlraum eine chemische Verbindung einzubringen, welche in der Lage ist, zwischen bestimmten Bestandteilen des Befestigungsverbunds eine chemische Reaktion auszulösen.

11. Verfahren gemäss Anspruch 7, in welchem die mechanische Behandlung darin besteht, die Tasche zu perforieren.

## Claims

1. Method of installing a tubular element (2; 51; 61; 71) in a cavity (5), comprising the following steps:
- a composite (2, 3; 50; 60; 70) comprising said tubular element (2; 51; 61; 71) covered by a layer of a fixing compound (3; 52; 62; 73) is prepared,
- said composite (2, 3; 50; 60; 70) is positioned along the internal surface of said cavity (5), and
- treatment activating said compound is carried out so as to fix said tubular element (2; 51; 61; 71) to said internal surface, **characterised in that** said composite (2, 3; 50; 60; 70) is positioned on the bottom of said cavity (5).

2. Method according to claim 1, wherein said tubular element (2; 51; 61; 71 ) is made from metal or from plastics material.

3. Method according to one of the preceding claims, wherein said tubular element (2; 51; 61; 71) is annulated.

4. Method according to one of the preceding claims, wherein said fixing compound is composed of a pocket (53; 63; 72) containing an adhesive material (52; 62; 73).

5. Method according to one of the preceding claims, wherein said fixing compound comprises an adhesive material (52; 62; 73) selected from a glue, a resin, polyethylene, a cement, concrete and mixtures thereof.

6. Method according to one of the preceding claims, wherein said activating treatment causes said fixing compound to pass from the solid state to the liquid state.

7. Method according to one of the preceding claims, wherein said activating treatment is at least one treatment selected from a thermal treatment, a chemical treatment and a mechanical treatment.

8. Method according to claim 7, wherein said thermal treatment consists in delivering high-temperature vapour to the inside of said hollow tubular element.

9. Method according to claim 7, wherein said thermal treatment consists of causing an electric current to pass through.

10. Method according to claim 7, wherein said chemical treatment consists of delivering into said cavity a chemical compound capable of triggering a chemical reaction between certain constituents of said fixing compound.

11. Method according to claim 7, wherein said mechanical treatment consists of perforating said pocket.
